(19) Europäisches Patentamt
European Patent Office
Office européen des brevets

(11) Publication number: 0 143 390 B1

(12) **EUROPEAN PATENT SPECIFICATION**

(45) Date of publication of patent specification: **19.07.89**

(51) Int. Cl.⁴: **A 63 B 39/06**, B 29 C 35/00, B 29 D 22/00 // B29K19:00

(21) Application number: **84113699.7**

(22) Date of filing: **13.11.84**

(54) **Tennis balls and core therefor.**

(30) Priority: **15.11.83 JP 215653/83**

(43) Date of publication of application: **05.06.85 Bulletin 85/23**

(45) Publication of the grant of the patent: **19.07.89 Bulletin 89/29**

(84) Designated Contracting States: **DE FR GB**

(56) References cited:
**FR-A-2 554 722**
**GB-A-2 002 639**
**US-A-4 340 685**
**US-A-4 394 473**

(73) Proprietor: **SUMITOMO RUBBER INDUSTRIES LIMITED**
**No. 1-1, Tsutsui-cho 1-chome**
**Chuo-ku Kobe-shi Hyogo 651 (JP)**

(72) Inventor: **Horiuchi, Kuniyasu**
**581, Aza-Asago Ishiya Mikage-cho Higashinada-ku**
**Kobe-shi Hyogo-ken (JP)**

(74) Representative: **Vossius & Partner**
**Siebertstrasse 4 P.O. Box 86 07 67**
**D-8000 München 86 (DE)**

**EP 0 143 390 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Generally, there are two types of tennis balls, a pressurized tennis ball and a non-pressurized one. The former is produced from cores made of natural or synthetic rubber, and its core is filled with air or a gas at a pressure of 0.6 to 0.9 kg/cm$^2$ above atmospheric pressure. The latter is also produced from cores made of natural or synthetic rubber, and its core is filled with air at atmospheric pressure.

The pressurized tennis ball is generally produced from a core for tennis balls obtained by blending a rubber composition, obtained from natural or high cis-polybutadiene rubber, with a conventional filler such as clay, calcium carbonate, etc., and then vulcanizing the resulting blend.

In US—A—43 40 685 a process is described for preparing a polybutadiene having a 1,2 configuration content of 5 to 40% and a cis-1,4 configuration content of 60% or more. From this polybutadiene rubber products for tire and other various industrial rubber products may be obtained.

GB—A—2 002 639 describes a pressureless playball comprising a hollow sphere of an elastomeric composition of natural rubber, cis-1,4 polybutadiene and a copolymer of an olefin with an unsaturated monocarboxylic acid.

A rigid tennis ball must meet the International Tennis Federation's standard (ITF standard). Therefore, its weight, outside diameter, rebound height (hereinafter referred to as impact resilience) and deformation are limited. When pressurized type tennis balls are produced with rubber compositions obtained from natural or high cis-polybutadiene rubber, the tennis ball is good in impact resilience but poor in compression. Improvement of this defect by using large amounts of a vulcanizing agent such as sulfur, brings about a detrimental change in the physical property of rubber, thus reducing the durability of the ball as well as increasing the change with lapse of time of the ball during play as a result of which the ball may be punctured. Increasing the amount of filler in order to obtain a proper compression increases the weight of the ball and makes it impossible to meet the ITF standard. Adding a filler having a strong reinforcing effect such as carbon, undesirably reduces the impact resilience.

In order to develop rigidness, adding SBR or a high styrene resin to the rubber composition has been suggested, but this method undesirably reduces the impact resilience although a proper compression is obtained by adding small amounts of a filler.

One object of the present invention is to obtain a tennis ball and a core for a tennis ball which keeps high values within the ITF standard and besides has excellent durability.

That is, the present invention provides a core i.e. a hollow sphere of a pressurized tennis ball obtained by vulcanizing a rubber composition comprising, based on the total rubber content, (a) 5 to 40% by weight of a polybutadiene having 5 to 30% syndiotactic 1,2-bonds and not less than 40% of cis-1,4-bonds, and (b) 60 to 95% by weight of natural rubber and/or a high cis-polybutadiene having not less than 90% cis-1,4-bonds.

Another object of the present invention is to provide pressurized tennis balls which meet the impact resilience and deformation specified by the ITF standard and have a high durability. This object is achieved by employing a rubber composition of particular blend to produce the tennis ball core.

The core for tennis balls obtained from the foregoing rubber composition has a high toughness at break and high elongation at break compared to cores obtained from the conventional high cis-polybutadiene. Also, tennis balls obtained from said core have excellent durability.

The 1,2-bond containing polybutadiene of the present invention is a polybutadiene having, in the polymer, 1,2-bonds

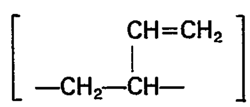

When the content of syndiotactic 1,2-bonds in the 1,2-bond containing polybutadiene exceeds 30%, the impact resilience of the ball is reduced. When the content is less than 5%, the ball becomes soft, and in order to obtain a proper compression, addition of a filler or resin such as SBR is required. This addition, however, causes a reduction in the impact resilience and gives a rigid feel at strike.

When the content of cis 1,4-bonds in the 1,2-bonds containing polybutadiene is less than 40%, the impact resilience is undesirably reduced.

The rubber composition used in the present invention contains the foregoing 1,2-bonds containing polybutadiene in proportions of 5 to 40 weight% of the whole polymer. When the proportion exceeds 40 weight%, rigidness is felt, and the impact resilience is reduced. When the proportion is less than 5 weight%, softness appears to prevent proper compression.

It is preferred for the foregoing rubber composition to contain a natural rubber or a high cis-polybutadiene containing not less than 90% of cis-1,4-bonds or both in proportions of 60 to 95 weight% of the total polymer. These rubbers are those which are generally used for cores for tennis balls.

The rubber composition used in the present invention may contain conventional fillers. The fillers include for example zinc oxide, clay, calcium carbonate, magnesium carbonate, etc.

The core for tennis balls of the present invention is obtained as follows: The foregoing polymers and fillers are kneaded together in a kneader such as a Banbury mixer or a roll; after adding a vulcanizing agent

and a vulcanization accelerator, kneading is continued and the rubber composition obtained is then formed into a sheet. The sheet is molded into a rod in an extruder, and the rod is then put in a half-shell mold and compression-molded into a semi-spherical shell body. A suitable gas-generating agent such as a mixture of an ammonium salt and a nitrite is put in the shell body, and another shell body is stuck thereto so as to form a sphere which is compression-molded to obtain a core for tennis balls.

Said core is covered with a felt covering by a conventional method to obtain a pressurized tennis ball.

With the core for tennis balls of the present invention, the values of the physical properties of rubber, particularly $T_B$ (toughness at break) and $E_B$ (elongation at break) are high, the change with lapse of time by repeated strikes is small and the durability is excellent.

Tennis balls obtained from the core for tennis balls of the present invention have the weight, deformation and impact resilience set by the ITF standard as well as excellent durability and aging resistance.

The present invention will be illustrated in more detail with reference to the following examples.

Examples 1 to 4

The components described in Table 1 were kneaded together to prepare a rubber composition which was then vulcanized at 141°C for 30 minutes. The physical properties of the vulcanized rubber thus obtained were determined according to JIS (Japanese Industrial Standard), K-6301 and JIS A. The results are shown in Table 2.

The recipes in Table 1 were adjusted in such a way that the pressurized tennis ball showed a forward deformation of 6.0 to 6.5 mm when measured on the Steevens machine.

Comparative Examples 1 to 4

Using the recipes described in Table 1, the physical properties of rubber were determined in the same manner as in Examples 1 to 4. The results are shown in Table 2. These recipes also were adjusted in such a way that the forward deformation was 6.0 to 6.5 mm.

TABLE 1

| | Example | | | | Comparative Example | | | |
|---|---|---|---|---|---|---|---|---|
| | 1 | 2 | 3 | 4 | 1 | 2 | 3 | 4 |
| Natural rubber | 90 | 80 | 70 | 50 | 100 | 100 | 80 | 60 |
| cis-1,4-polybutadiene[1] | — | — | — | 30 | — | — | — | 40 |
| 1,2-Bonds containing polybutadiene[2] | 10 | 20 | 30 | 20 | — | — | — | — |
| Styrene/butadiene rubber[3] | — | — | — | — | — | — | 20 | — |
| Zinc oxide | 12 | 12 | 12 | 12 | 12 | 12 | 12 | 12 |
| White carbon | — | — | — | — | — | 10 | — | — |
| Hard clay | 20 | 20 | 20 | 20 | 20 | 10 | 20 | 20 |
| Magnesium carbonate | 40 | 40 | 40 | 40 | 40 | 40 | 40 | 40 |
| Stearic acid | 1 | 1 | 1 | 1 | 1 | 1 | 1 | 1 |
| Sulfur | 3.5 | 3.3 | 3.1 | 3.3 | 4.2 | 3.5 | 3.6 | 4.2 |
| Accelerator M[4] | 2.0 | 2.0 | 2.0 | 2.0 | 2.0 | 2.0 | 2.0 | 2.0 |
| Accelerator D[5] | 2.0 | 2.0 | 2.0 | 2.0 | 2.0 | 2.0 | 2.0 | 2.0 |

(1) Polybutadiene containing about 98% of cis-1,4-bonds BR11 produced by Japan Synthetic Rubber Co.
(2) Polybutadiene containing 12% of a syndiotactic 1,2-polybutadiene and 86% of cis-1,4-bonds UBEPOL-VCR 412; produced by Ube Industries Ltd;
(3) SBR #1502; produced by Japanese Geon Co.;
(4) 2-Mercaptobenzothiazole;
(5) Diphenylguanidine.

TABLE 2

| | 200% modulus ($kg/cm^2$) | Tensile strength ($kg/cm^2$) | Elongation (%) | Hardness (JIS-A) |
|---|---|---|---|---|
| Example 1 | 97.6 | 145.0 | 320 | 74 |
| " 2 | 98.2 | 144.2 | 310 | 75 |
| " 3 | 98.5 | 144.0 | 300 | 76 |
| " 4 | 98.0 | 144.4 | 315 | 75 |
| Comparative Example 1 | 97.0 | 130 | 280 | 75 |
| " 2 | 97.5 | 137 | 270 | 76 |
| " 3 | 98.2 | 136 | 300 | 75 |
| " 4 | 97.6 | 131 | 270 | 75 |

Examples 1′ to 4′

The components described in Table 1 were kneaded together in a kneader to prepare a rubber composition which was then formed into a sheet of 2.0 mm in thickness. The sheet was extrusion-molded into a rod in an extruder, and the rod was placed in a half-shell mold and compression/vulcanization-molded into a semi-spherical shell body (inside diameter, 53.8 mm; outside diameter, 60.5 mm). The semi-spherical shell body was then cured at 140°C for 30 minutes. A gas-generating agent, a mixture of an ammonium salt and a nitrite, was placed in the cured shell body, and another cured shell body was fitted thereto so as to form a sphere, and the whole was compression-molded while heating at 140°C for 25 minutes to prepare a core for tennis balls. The core thus obtained was covered with a felt covering to obtain a pressurized tennis ball.

The tennis ball obtained was measured for the values of the ITF standard and the percent change with lapse of time. The results are shown in Table 3. [In Example 1′, the rubber composition was prepared using the same recipe as used in Example 1 (the same applies to other examples)].

TABLE 3

| | Weight (g) | Forward defor-mation (mm)(6) | Return defor-mation mm(7) | Rebound cm(8) | The percent change with lapse of time of forward compression by repeated strikes (%)(10) |
|---|---|---|---|---|---|
| Example 1' | 57.5 | 6.2 | 9.4 | 145 | 11.5 |
| " 2' | 57.5 | 6.3 | 9.5 | 144 | 11.2 |
| " 3' | 57.6 | 6.1 | 9.2 | 143 | 11.0 |
| " 4' | 57.5 | 6.1 | 9.3 | 144 | 11.1 |
| Comparative Example 1' | 57.6 | 6.3 | 9.5 | 145 | 13.5 |
| " 2' | 57.5 | 6.1 | 9.3 | 133 | — |
| " 3' | 57.4 | 6.0 | 9.1 | 135 | — |
| " 4' | 57.5 | 6.1 | 9.2 | 142 | 14.5 |
| ITF standard(9) | 56.7—58.5 | 5.6—7.4 | 8.9—10.8 | 135—147 | — |

(6) Measured as follows with a Steevens machine: The ball is continuously compressed by about 2.54 cm each in the directions of the three diameters normal to one another, and this cycle is repeated three times (nine compressions in total); within 2 hours after this preliminary compression, an initial load of 3.5 pounds (1.575 kg) (first point) and then a load of 18 pounds (8.165 kg) (second point) are applied to the ball, and the variable (mm) from the first point to the second one is read. The forward deformation is expressed by the variable.

(7) After the variable has been read in the above measurement of the forward deformation, the ball is further compressed to 2.54 cm by applying a load, the load is then reduced to 18 pounds (that is, the above second point is reached) and the variable between the two points is again read. The return deformation is expressed by the variable.

(8) The ball is dropped down to a concrete surface from a level of 254 cm, and the level of rebound is measured.

(9) International Tennis Federation's standard.

(10) The ball is made to mechanically collide at an initial velocity of 25 m/sec against an iron plate at a distance of 50 cm. This operation is repeated 1500 times (this corresponds to the three-set match of top players).

As is apparent from the results of Tables 1 to 3, a reduction in impact resilience is noticed in Comparative Examples 2' and 3'. As is apparent from Examples 1' to 4' the change with lapse of time of the forward deformation by repeated strikes of the tennis ball of the present invention is remarkably small, showing that it has better durability and aging resistance than conventional pressurized tennis balls.

**Claims**

1. A hollow sphere of a pressurized tennis ball obtained by vulcanizing a rubber composition comprising, based on the total rubber content,

a) 5 to 40% by weight of a polybutadiene having 5 to 30% syndiotactic 1,2-bonds and not less than 40% of cis-1,4-bonds, and

b) 60 to 95% by weight of natural rubber and/or a high cis-polybutadiene having not less than 90% cis-1,4-bonds.

2. A hollow sphere of a pressurized tennis ball according to Claim 1, provided with a felt covering.

3. Pressurized tennis balls comprising hollow spheres according to Claim 1 and 2.

**Patentansprüche**

1. Hohlkugel eines unter Druck stehenden Tennisballs, erhalten durch Vulkanisation einer Kautscukmasse, die, bezogen auf den gesamten Kautschukgehalt, umfaßt.

a) 5 bis 40 Gew.-% eines Polybutadiens mit 5 bis 30% syndiotaktischen 1,2-Bindungen und nicht weniger als 40% cis-1,4-Bindungen, und

b) 60 bis 95 Gew.-% natürlicher Kautschuk und/oder Polybutadien mit hohem cis-Anteil mit nicht weniger als 90% cis-1,4-Bindungen.

2. Hohlkugel eines unter Druck stehenden Tennisballs nach Anspruch 1, ausgerüstet mit einem Filzüberzug.

3. Unter Druck stehende Tennisbälle, umfassend Hohlkugeln nach Anspruch 1 und 2.

**Revendications**

1. Une sphère creuse d'une balle de tennis pressurisée obtenue par vulcanisation d'une composition de caoutchouc comprenant, basée sur la teneur totale en caoutchouc

(a) 5 à 40% en poids d'un polubutadiène ayant 5 à 30% de liaisons 1,2 syndiotactiques et au moins 40% de liaisons cis-1,4, et

(b) 60 à 95% en poids de caoutchouc naturel et/ou d'un caoutchouc à haute teneur en cis-polybutadiène ayant au moins 90% de liaisons cis-1,4.

2. Un sphère creuse d'une balle de tennis pressurisée selon la revendication 1, pourvue d'un revêtement de feutre.

3. Balles de tennis pressurisées comprenant des sphères creuses selon la revendication 1 ou 2.